(19)

Europäisches
Patentamt
European
Patent Office
Office européen
des brevets

(11) **EP 2 919 303 A1**

(12) **EUROPEAN PATENT APPLICATION**
published in accordance with Art. 153(4) EPC

(43) Date of publication:
**16.09.2015 Bulletin 2015/38**

(21) Application number: **13853235.3**

(22) Date of filing: **08.11.2013**

(51) Int Cl.:
**H01M 4/58** *(2010.01)*     **H01M 4/36** *(2006.01)*

(86) International application number:
**PCT/JP2013/080293**

(87) International publication number:
**WO 2014/073652 (15.05.2014 Gazette 2014/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.11.2012  JP 2012248859**

(71) Applicant: **Mitsui Engineering & Shipbuilding Co., Ltd.**
**Chuo-ku**
**Tokyo 104-8439 (JP)**

(72) Inventors:
• **YOSHIDA, Yusuke**
  **Ichihara-shi**
  **Chiba 290-8531 (JP)**

• **HATTA, Naoki**
  **Ichihara-shi**
  **Chiba 290-8531 (JP)**
• **SHIBATA, Naoto**
  **Ichihara-shi**
  **Chiba 290-8531 (JP)**
• **SHIMOMURA, Noriyuki**
  **Ichihara-shi**
  **Chiba 290-8531 (JP)**

(74) Representative: **Hoffmann Eitle**
**Patent- und Rechtsanwälte PartmbB**
**Arabellastraße 30**
**81925 München (DE)**

(54) **ELECTRODE MATERIAL AND PROCESS FOR MANUFACTURING ELECTRODE MATERIAL**

(57)     The purpose of the present invention is to improve both electron conductivity and lithium ion conductivity in an electrode having lithium metal phosphate and thereby attain excellent electrode characteristics and inhibit the deterioration of coating properties and the degradation of a coating layer.

An electrode material has a layer comprising Li ion conductive substance including Li, at least any one of Fe and Mn, P and O, and conductive carbon C on the surface of primary particles of an electrode active material represented by the general formula $LiMPO_4$ (wherein, M= $[Fe_tMn_{1-t}]$, and t is a number between 0 inclusive and 1 inclusive); minute secondary particles formed from a plurality of the primary particles that aggregate, and bind to each other via the layer comprising Li ion conductive substance and conductive carbon C; and an area-equivalent diameter of 45 nm or more determined by a specific surface area obtained from the nitrogen adsorption Brunauer, Emmett and Teller (BET) multipoint method.

FIG.1

EP 2 919 303 A1

**Description**

[FIELD OF THE INVENTION]

The present invention relates to an electrode material which can be used for a lithium ion secondary battery and the like and a method for producing the electrode material.

[BACKGROUND OF THE INVENTION]

Conventionally, lithium metal phosphate such as $LiFePO_4$ having an olivine-type crystal structure (space group Pnma) is used for an electrode of a lithium ion secondary battery and the like. While lithium metal phosphate is excellent in terms of cost, safety, and durability, it has poor electron conductivity and Li ion conductivity. When lithium metal phosphate is used for an electrode material, it may be necessary to coat the surface of an electrode active material with carbon to compensate electron conductivity. On the other hand, with respect to Li ion conductivity, lithium metal phosphate has only one-dimensional ion pass, low degree of freedom in diffusion direction, and low Li diffusivity. Therefore, there has been an attempt to coat the surface of the electrode active material with a Li ion conductive layer to compensate for Li ion conductivity (diffusivity).

For example, Patent Literature 1, as for an electrode active material represented by the general formula $LiMnPO_4$, discloses an electrode active material coated with a coating film layer consisting of $LiFePO_4$ and a coating film layer comprising carbon.

Meanwhile, Patent Literature 2 discloses particles whose cores comprising Li, M, P and O (wherein, M is at least any one of Fe, Mn, Co and Ni) are coated with an oxide coating comprising at least one of N and C, Li, M, P and O. In this case, it shows an aspect that the oxide coating compensates for Li ion conductivity (diffusivity) to expresses high input/output characteristics.

On the other hand, Patent Literature 3 discloses an electrode material where the surface of the electrode active material is coated with a composite coating layer consisting of conductive carbon and Li ion conductive substance.

[Related Art Document]

[Patent Literature]

[Patent Literature 1] JP-A-2011-181375
[Patent Literature 2] Japanese Translation of PCT International Application Publication No. JP-T-2010-517240
[Patent Literature 3] WO 2012/133566

[SUMMARY OF THE INVENTION]

[Problem to be solved by the invention]

When an electrode having lithium metal phosphate coated with carbon is used for an electrode of a second battery, and subjected to charging and discharging, electron conductivity improves but lithium ion conductivity may decrease. This shows that in an electrode having lithium metal phosphate, there is a trade-off relationship between electron conductivity and lithium ion conductivity.

Even if an electrode active material disclosed in Patent Literature 1 and Patent Literature 2 is used, it was difficult to achieve both electron conductivity and lithium ion conductivity in some cases due to their trade-off relationship.

On the other hand, as for an electrode active material disclosed in Patent Literature 3, improvement in both electron conductivity and Li ion conductivity is achieved by coating the surface of the electrode active material with a composite coating layer consisting of conductive carbon and Li ion conductive substance.

In order to enhance charging and discharging characteristics (especially, rate characteristics) of a lithium metal phosphate electrode active material, due to low electron conductivity and Li ion conductivity of the electrode active material, it is necessary to increase the contact area between carbon coating which compensates for electron conductivity and Li ion conductive substance, and the electrode active material by reducing a primary particle diameter of the electrode active material, as well as to limit Li ion diffusion distance in the electrode active material. However, smaller primary particle diameter of the electrode active material generally leads to smaller secondary particle diameter thereof, and the viscosity of a coating dispersion where the electrode active material is used as an electrode material increases. Therefore, it is required to reduce the content of the electrode active material in the coating dispersion, resulting in the deterioration of coating properties and the degradation of a coating layer.

No description about the deterioration of coating properties and the degradation of a coating layer is mentioned in Patent Literature 1, Patent Literature 2 and Patent Literature 3, and there is no description about the means for solving these problems.

An object of this invention is to improve both electron conductivity and lithium ion conductivity, to obtain excellent electrode properties and to reduce the deterioration of coating properties and the degradation of a coating layer in an electrode having lithium metal phosphate.

[Means for solving the problem]

An electrode material according to a first aspect of the present invention for solving the problems mentioned above includes: a layer having Li ion conductive substance including Li, at least any one of Fe and Mn, P and O, and conductive carbon C on the surface of primary particles of an electrode active material represented by the general formula $LiMPO_4$ (wherein, M=[$Fe_tMn_{1-t}$], and t is a number between 0 inclusive and 1 inclusive); minute secondary particles formed from a plurality of the primary particles that aggregate, and bind to each other via the layer having Li ion conductive substance and conductive carbon C; and an area-equivalent diameter of 45 nm or more determined by the following equation (1) with a specific surface area obtained from the nitrogen adsorption Brunauer, Emmett and Teller (BET) multipoint method.

$\text{Equation (1)}$

$$(\text{Area-equivalent diameter}) = 6 / \{(\text{true density of electrode active material}) \times (\text{specific surface area})\}$$

The term "bind" means both chemical binding and physical binding herein.

The general formula $LiMPO_4$ means that each element of Li:M:P:O is contained in an approximate ratio of 1:1:1:4 herein. This does not strictly require that each element is contained in the exact ratio of 1:1:1:4 or no impurities are included.

According to this aspect, the layer comprising Li ion conductive substance including Li, at least any one of Fe and Mn, P and O allows two- or three-dimensional movement of Li ions via the layer, resulting in higher Li ion conductivity. Furthermore, the layer comprises conductive carbon C, resulting in electron conductivity increase. As a result, it is possible to improve both electron conductivity and lithium ion conductivity.

According to this aspect, since the primary particles bind via the layer comprising Li ion conductive substance and conductive carbon C to form minute secondary particles, the Li ions can move two- or three-dimensionally via the layer from one primary particle to another, resulting in higher Li ion conductivity. Furthermore, electrons can move from one primary particle to another via the layer comprising conductive carbon C, resulting in higher electron conductivity. This means that it is possible to further improve both electron conductivity and lithium ion conductivity.

A specific surface area that corresponds to the above area-equivalent diameter 45 nm, for example, for M=Fe (where true density of electrode active material is 3.60 g/cm$^3$), is 37.0 m$^2$/g. Further, that for M=Mn (where true density of electrode active material is 3.43 g/cm$^3$) is 38.9 m$^2$/g. In this aspect, an exposed outer surface area of primary particles constituting the electrode material is limited to be equal to or less than the specific surface area. Such limited specific surface area is possible by minute formation of the secondary particles. Thus, when using the electrode material for a battery electrode, and forming a coating dispersion for a current collector metal foil, even if the amount ratio of the electrode material is increased, the interaction with a polar polymer binder such as polyvinylidene fluoride (PVDF) which is added into the coating dispersion can be inhibited. As a result, the viscosity of the coating dispersion can be suppressed. Thus, it is possible to inhibit the deterioration of coating properties and the degradation of the coating layer.

An electrode material according a second aspect of the present invention is the electrode material according to the first aspect, wherein in an X-ray photoelectron spectroscopy measurement obtained by irradiating a flat surface of an electrode material after compression molded into a flat pellet with single-crystal spectroscopy Al-Kα X-ray at 53±10 take-off angle when setting vertical and horizontal directions to 0 degrees and 90 degrees with respect to the flat surface, a surface composition determined by the result of narrow scan of electron orbitals of C1s, Li1s, Fe2p3/2, Mn2p3/2, P2p and O1s is represented by the general formula $C_cLi_aFe_xMn_{1-x}P_yO_z$. (Wherein, c is a number between 0.5 inclusive and 4 inclusive, a is a number between 2 inclusive and 4 inclusive, x is a number between 0 inclusive and 1 inclusive and y is a number between 1 inclusive and 3 inclusive. z is a number represented by the following equation (2). δ is a number which satisfies the following equation (3) assuming that the average valence $N_{Fe}$ of Fe and the average valence $N_{Mn}$ of Mn are both 2.)

Equation (2)

$$z=[\{a+xN_{Fe}+(1-x)N_{Mn}+5y\}/2]-\delta$$

Equation (3)

$$0.1\geq\delta/\{a+xN_{Fe}+(1-x)N_{Mn}+5y\}\geq0$$

In the electrode material according to this aspect, the Li ion conductive substance comprises effective amounts of Li ions and (poly) phosphate ions to develop high Li ion conductivity. The Li ion conductive substance also comprises an effective amount of at least either of Fe and Mn of transition metal elements to develop electron conductivity. An amount of $\delta$ corresponding to oxygen deficiency of the Li ion conductive substance may be zero. However, when $\delta$ is a positive number within the range of the equation (3) which indicates a range of oxygen deficiency index, Li ion conductive substance may have an n-type semi-conductive property, and the electrode material may achieve higher electron conductivity. In the case where $\delta$ is larger than the upper range of the equation (3), structural stability of the material may be impaired.

Furthermore, in this aspect, conductive carbon C is also included in an effective amount ratio to impart electron conductivity.

For these reasons, the electrode material having a layer comprising such Li ion conductive substance and conductive carbon C exhibits good charging and discharging characteristics.

Note that "take-off angle $53\pm10$ degrees" does not strictly limit the take-off angle to be "$53\pm10$ degrees" and can be an approximate value of "$53\pm10$ degrees".

An electrode material according to a third aspect of the present invention is the electrode material according to the second aspect, wherein a is 2.0 inclusive to 3.0 inclusive and y is 1.5 inclusive to 1.6 inclusive in the general formula $C_cLi_aFe_xMn_{1-x}P_yO_z$.

In an electrode material having such coefficient a of Li and coefficient y of P, the Li ion conductive substance has particularly excellent Li ion conductivity, and also has effective electron conductivity. Therefore, the electrode material comprising a layer having the Li ion conductive substance and conductive carbon C exhibits particularly good charging and discharging characteristics.

An electrode material according to a forth aspect of the present invention is the electrode material according to the second aspect, wherein a is 2.5 inclusive to 3.0 inclusive, and y is 1.6 exclusive to 2.0 inclusive in the general formula $C_cLi_aFe_xMn_{1-x}P_yO_z$.

In an electrode material having such coefficient a of Li and coefficient y of P, the Li ion conductive substance has more excellent Li ion conductivity. Therefore, the electrode material exhibits even better charging and discharging characteristics.

An electrode material according to a fifth aspect of the present invention is the electrode material according to any one of the first to forth aspects, wherein an average primary particle diameter is 20 nm or more and less than the area-equivalent diameter.

An "average particle diameter" is a volume-surface mean diameter calculated by the formula $(\sum nd^3 / \sum nd^2)$ with particle diameter d (where the average value of major axis length and minor axis length of primary particles is used) observed under a high-resolution electron microscope (transmission type and scanning type) or the like and the observed number of primary particles, n. Observation view fields are appropriately chosen to secure sufficient n.

The electrode material of this aspect has an average primary particle diameter smaller than the area-equivalent diameter calculated by a specific surface area obtained from the nitrogen adsorption BET multipoint method. This indicates that among the total surface area of all primary particles constituting the electrode material of this aspect, there are sites where nitrogen gas used in the BET specific surface area measurement cannot contact or be adsorbed. When using the electrode material of this aspect for a battery electrode, a coating dispersion for coating the electrode cannot infiltrate into or contact the binding sites as with nitrogen used in the BET specific surface area measurement. Since there is hardly interaction at the binding sites with polar polymer binder such as PVDF which is added into the coating dispersion, the viscosity increase of the coating dispersion is suppressed and it can prevent deterioration of coating properties and the degradation of a coating layer. As mentioned above, as the binding sites have both Li ion conductivity and electron conductivity, when an electrode material for a main body is used for a battery, active material primary particles of the binding sites function well as an electrode material.

Further, the electrode material of this aspect has an average primary particle diameter of an electrode active material of 20 nm or more. If an average primary particle diameter is smaller than 20 nm, an electrode active material deteriorates, and the charging and discharging capacity decreases.

An electrode material according to a sixth aspect of the present invention is the electrode material according to any one of the first to fifth aspects and according to any one of claims 1 to 5, wherein DC conductivity of the electrode material compressed under a pressure of 60 MPa at 25 °C after pulverizing until the maximum diameter of secondary particle becomes 20 $\mu$m or less is $10^{-6}$S/cm or more.

Due to its high electron conductivity of the electrode material of this aspect, the electrode material exhibits good charging and discharging characteristics. When using the electrode material for a battery electrode, the electrode material can form a coating layer which is smooth, high in packing density and difficult to be peeled.

Note that "the maximum diameter of secondary particles becomes 20 $\mu$m or less" does not strictly limit the maximum diameter to be "20 $\mu$m or less" and can be an approximate value of "20 $\mu$m or less". Likewise, note that "DC conductivity of the electrode material compressed under a pressure of 60 MPa at 25 °C" does not strictly limit the pressure and the temperature to be "60 MPa" and "25 °C" respectively and can be "DC conductivity of the electrode material" under the condition where the pressure and the temperature are approximate values of "60 MPa" and "25 °C" respectively.

An electrode material according to a seventh aspect of the present invention is the electrode material according to any one of the first to sixth aspects, wherein t is less than 0.2 in M=[$Fe_t Mn_{1-t}$].

According to this aspect, 80 percent or more of M is Mn, and therefore, in more than 80 percent cases of using the electrode active material, the electrode material has a high potential such as oxidation-reduction potential against electrode potential reference of metal Li/Li$^+$ being approximately 4.1 V. The electrode material can be used as an electrode material of high energy density which easily substitutes for a conventional electrode material such as $LiCoO_2$ of lamellar crystal structure and $LiMn_2O_4$ of spinel type crystal structure having an equivalent oxidation-reduction potential.

An electrode material according to an eighth aspect of the present invention is the electrode material according to the seventh aspect, wherein the area-equivalent diameter is 70nm or less.

In an electrode material such as the one in the seventh aspect having an electrode active material $LiMPO_4$ where 80 percent or more of M is Mn, Li ion conductivity becomes extremely low within the electrode active material. When assembling a battery with the electrode material as a component member and the specific surface area is too small, there is lack of contact interface between Li ion conductive medium such as electrolytic solution and the electrode material sealed in the battery. As a result, even if the electrode material formed with the electrode active material having a layer that includes the Li ion conductive substance mentioned above, it tends to fail to provide good battery characteristics. On the contrary, in this aspect, the area-equivalent diameter is sufficiently reduced and consequently, the specific surface area is sufficiently increased, by which the contact interface can be ensured sufficiently to provide good battery characteristics.

An electrode material according to a ninth aspect of the present invention is the electrode material according to the eighth aspect, wherein the area-equivalent diameter is 60 nm or less.

In this aspect, the area-equivalent diameter is further reduced and consequently, the specific surface area is further increased, by which the contact interface can be ensured more sufficiently to provide excellent battery characteristics.

An electrode material according to a tenth aspect of the present invention is the electrode material according to any one of the first to ninth aspects, wherein a layer comprising the Li ion conductive substance and conductive carbon C is an amorphous layer.

An amorphous layer herein means that a layer has an amorphous structure and may partially have crystal structure.

According to this aspect, the layer is an amorphous layer which allows three-dimensional movement of Li ions via the layer, resulting in higher Li ion conductivity. This means that it is possible to further improve both electron conductivity and lithium ion conductivity.

An electrode material according to an eleventh aspect of the present invention is the electrode material according to any one of the first to tenth aspects, wherein the area-equivalent diameter is 50 nm or more.

A specific surface area that corresponds to the area-equivalent diameter 50 nm, for example, for M=Fe (where true density of electrode active material is 3.60 g/cm$^3$), is 33.3 m$^2$/g.

Further, that for M=Mn (where true density of electrode active material is 3.43 g/cm$^3$) is 35.0 m$^2$/g. In this aspect, a specific surface area is limited to be these values or less. Therefore, even if the amount ratio of the electrode material is increased when forming a coating dispersion, the viscosity of a coating dispersion can be suppressed. It is possible to further inhibit the deterioration of coating properties and the degradation of a coating layer.

A method for producing an electrode material according to a twelfth aspect of the present invention includes: a mixing step 1 of dispersing and mixing a base material of an electrode active material in fine powder form, represented by the general formula $LiMPO_4$ (wherein, M=[$Fe_t Mn_{1-t}$], and t is a number between 0 inclusive and 1 inclusive), Li ion source material, and ion source material of at least any one of Fe ion and Mn ion; a mixing step 2 of dispersing and mixing the mixture obtained from the mixing step 1, and phosphate ion source material or multivalent phosphate ion source material; a mixing and granulating step of minutely granulating the mixture obtained from the mixing step 2 and conductive carbon C source material until the aggregate particle diameter becomes 1 $\mu$m inclusive to 50 $\mu$m inclusive; and a calcinating step of calcinating the mixture obtained from the mixing and granulating step to form a layer comprising Li ion conductive substance including Li, at least any one of Fe and Mn, P and O, and conductive carbon C on the surface of primary particles of the base material of the electrode active material in fine powder form represented by the general formula $LiMPO_4$.

In the mixing step 1, the mixing step 2 and the mixing and granulating step above, each source material added to the base material of the electrode active material may be dispersed and mixed in a dry state or by dispersing or dissolving in an appropriate solvent such as water and alcohol. Additionally if necessary, a step of removing the solvent by distillation may be carried out after these steps. The mixing step 1 and the mixing step 2 may be carried out simultaneously in a single step.

According to the production method of this aspect, an electrode material having a layer that includes Li ion conductive substance including Li, at least any one of Fe and Mn, P and O, and conductive carbon C on the surface of primary particles of the base material of an electrode active material represented by the general formula $LiMO_4$ above (wherein, M=$[Fe_tMn_{1-t}]$, and t is a number between 0 inclusive and 1 inclusive) can be produced The electrode material produced in this aspect allows Li ions and electrons to move two- or three-dimensionally via the layer, resulting in enhancing both Li ion conductivity and electron conductivity. The electrode material produced in this aspect can improve both electron conductivity and lithium ion conductivity.

According to the production method of this aspect, an electrode material having a relatively small specific surface area can be produced by dispersing and mixing the source materials according to the sequence of steps mentioned above. An area-equivalent diameter determined by the following equation (1) with such relatively small specific surface area obtained from the nitrogen adsorption BET multipoint method is 45 nm or more. When forming a coating dispersion for coating a current collector metal foil with the electrode material, even if the amount ratio of the electrode material is increased, the viscosity of the coating dispersion can be suppressed. Thus, it is possible to inhibit the deterioration of coating properties and the degradation of a coating layer.

$$\text{Equation (1)}$$
$$(\text{Area-equivalent diameter}) = 6 \,/\{(\text{true density of electrode active material}) \times (\text{specific surface area})\}$$

In the production method of this aspect, a portion or a major portion of at least one of Fe and Mn in ion source material of at least any one of Fe ion and Mn ion which is added in the mixing step 1, and a portion of M (=$[Fe_tMn_{1-t}]$) of the base material of the electrode active material in fine powder form represented by the general formula $LiMPO_4$ may be replaced with each other by migration due to heat diffusion during the calcinating step. As a result, the composition of the interior of primary particles of the electrode active material may change from the original composition, or the content of at least one of Fe and Mn in the Li ion conductive substance present on the surface of the primary particles may change from the added composition of at least one of Fe and Mn in the ion source material of at least any one of Fe ion and Mn ion added in the mixing step 1 in the final electrode material.

"Dispersing and mixing the mixture obtained from the mixing step 2 and conductive carbon C source material, and granulating until the aggregate particle diameter becomes 1 $\mu$m inclusive to 50 $\mu$m inclusive" does not strictly limit the aggregate particle diameter to be "1 $\mu$m inclusive to 50 $\mu$m inclusive" and the diameter can be an approximate value of "1 $\mu$m inclusive to 50 $\mu$m inclusive".

[BRIEF DESCRIPTION OF THE DRAWINGS]

FIG. 1 is an outline drawing of an electrode material according to one example of the present invention.
FIG. 2 is a graph showing a result of X-ray diffraction of Example 1.
FIG. 3 is a graph showing a result of X-ray diffraction of Example 2.
FIG. 4 is a graph showing the constant-current discharge rate characteristics of Example 1.
FIG. 5 is a graph showing the constant-current discharge rate characteristics of Example 2.
FIG. 6 is a graph showing the constant-current discharge rate

characteristics of Comparative Example 1.

[DETAILED DESCRIPTION OF THE PREFERRED EMBODIMENTS]

Description is hereinafter made of the present invention based on examples. It should be noted that the present invention is not limited by the description of the examples.

<Electrode active material>

An electrode active material in an electrode material according to the present invention is represented by the general formula $LiMPO_4$ (wherein, $M=[Fe_tMn_{1-t}]$, and t is a number between 0 inclusive and 1 inclusive), and releases or absorbs Li ions when subjected to electrochemical oxidization or reduction. The electrode active material has a crystal structure where the cations can move only in one-dimensional allowable movement direction in the crystal lattice during the process of oxidation or reduction.

One example of the electrode active material is an electrode material having an olivine-type crystal structure (orthorhombic system, space group Pnma) represented by the general formula $LiMPO_4$. The general formula $LiMPO_4$ means that each element of Li:M:P:O is contained in an approximate ratio of 1:1:1:4 herein. This does not require that each element is contained in the exact ratio of 1:1:1:4 or no impurities are included.

M is at least any one of Fe and Mn. When a plurarity of Fe and Mn are included, M is the added number of these. If each element of Li:M:P:O is contained in an approximate ratio of 1:1:1:4, it falls within the present invention. An electrode active material where 80 percent or more of M is Mn is preferred. In such electrode active material, in more than 80 percent cases of using the electrode active material, the electrode material has a high potential such as oxidation-reduction potential against electrode potential reference of metal $Li/Li^+$ being approximately 4.1 V. The electrode material can be used as an electrode material of high energy density which easily substitutes for a conventional electrode material such as $LiCoO_2$ of lamellar crystal structure and $LiMn_2O_4$ of spinel type crystal structure having an equivalent oxidation-reduction potential.

An electrode active material in an electrode material according to the present invention preferably has an average primary particle diameter of 20 nm or more and less than an area-equivalent diameter. The average particle diameter is a volume-surface mean diameter determined by the formula $(\sum nd^3 / \sum nd^2)$ with a particle diameter d (where the average value of major axis length and minor axis length of the primary particles is used) observed under a high-resolution electron microscope (transmission type and scanning type) or the like and an observed number of primary particles, n. Observation view fields are appropriately chosen to secure sufficient n.

In an electrode material of the present invention, an average primary particle diameter of the electrode active material is smaller than the area-equivalent diameter determined by the specific surface area obtained from the nitrogen adsorption BET multipoint method. This indicates that among the total surface area of all primary particles constituting the electrode material of this aspect, there are sites where nitrogen gas used in the BET specific surface area measurement cannot contact or be adsorbed. In an electrode material of the present invention, a plurality of primary particles aggregate and bind to each other via a layer primarily including the Li ion conductive substance and conductive carbon C to form minute secondary particles. For this reason, nitrogen gas does not contact and is not adsorbed on the surface of the primary particle at the binding sites, and a specific surface area measured by the BET multipoint method decreases accordingly. As a result, the area equivalent diameter calculated from the specific surface area is increased, and the average primary particle diameter becomes smaller than the area equivalent diameter.

When using an electrode material according to this aspect for a battery electrode, a coating dispersion for coating an electrode cannot infiltrate into or contact the binding sites as with nitrogen used in the BET specific surface area measurement. Therefore, there is hardly interaction at the binding sites with polar polymer binder such as PVDF which is added into the coating dispersion, and the viscosity increase of the coating dispersion is suppressed and it can prevent the degradation of a coating layer. As mentioned above, as the binding sites have both Li ion conductivity and electron conductivity, when an electrode material for a main body is used for a battery, active material primary particles of the binding sites function well as an electrode material.

Further, in an electrode material of the present invention, an average primary particle diameter is 20 nm or more. If an average primary particle diameter is smaller than 20 nm, an electrode active material deteriorates, and the charging and discharging capacity decreases.

The electrode active material can be synthesized based on a known method, such as a wet process, a solid phase calcination process, or a solid phase calcination process of a reaction intermediate obtained by wet synthesis (so-called sol-gel process, for example), and its production method is not specifically limited. For example, a method for producing an electrode active material equivalent to $LiMPO_4$ having an olivine-type crystal structure or an electrode material containing the electrode active material is disclosed in official gazettes of JP-A-2002-151082 (wet process), JP-A-2004-095385 (wet process), JP-A-2007-119304 (wet process), JP-A-Hei 9-134724 (solid phase calcination process), JP-A-2004-63386 (solid phase calcination process), JP-A-2003-157845 (sol-gel process) and so on.

<Li ion conductive substance>

A material of the present invention has a layer comprising Li ion conductive substance including Li, at least any one of Fe and Mn, P and O, and conductive carbon C on the surface of primary particles of an electrode active material represented by the general formula $LiMPO_4$ (wherein, $M=[Fe_tMn_{1-t}]$, and t is a number between 0 inclusive and 1 inclusive).

An electrode material of the present invention has substances including Li, at least any one of Fe and Mn, P and O as Li ion conductive substance. The Li ion conductive substance has a property which allows two- or three-dimensional internal movement of Li ions.

More preferably, a layer comprising Li ion conductive substance has ion conductivity equivalent to $10^{-8}$S/cm or more based on diffusive movement of Li ions and electron conductivity of $10^{-8}$S/cm or more. Even more preferably, a layer comprising Li ion conductive substance has ion conductivity equivalent to $10^{-6}$S/cm or more and electron conductivity equivalent to $10^{-6}$S/cm or more. This electron conductivity is achieved by having a specific amount or more of transition metal elements (wherein at least any one of Fe and Mn) in the Li ion conductive substance.

Li ion conductive substance containing such transition metal elements as a constituent element functions not only as a conduction path for lithium ions but also as an electron-conduction path with the primary particles of the electrode active material represented by the general formula $LiMPO_4$. Consequently, polarization during charging and discharging can be reduced in the entire electrode material.

Examples of such Li ion conductive substance include the following substances having fundamental composition of (poly)phosphates partially substituted with Fe and Mn and composite compounds of two or more of these substances (wherein r is 1 or less, preferably a positive number of 0.3 or less, and the coefficient of Li is a positive number).

$$Li_{3-2r}Fe(II)_{r}PO_4, \ Li_{2-2r}Fe(II)_{r}P_2O_7, \ Li_{3-3r}Fe(III)_{r}PO_4,$$

$$Li_{2-3r}Fe(III)_{r}P_2O_7, \ Li_{9-4r}Fe(II)_{2r}(PO_4)_3, \ Li_{9-6r}Fe(III)_{2r}(PO_4)_3,$$

etc.

$$Li_{3-2r}Mn(II)_{r}PO_4, \ Li_{2-2r}Mn(II)_{x}P_2O_7, \ Li_{3-3r}Mn(III)_{r}PO_4,$$

$$Li_{2-3r}Mn(III)_{r}P_2O_7, \ Li_{9-4r}Mn(II)_{2r}(PO_4)_3, \ Li_{9-6r}Mn(III)_{2r}(PO_4)_3,$$

etc.

Preferably, Li ion conductive substance has an amorphous structure in at least a portion thereof, and accordingly Li ions can move three-dimensionally within the substance, and Li ion conductivity is further increased. Li ion conductive substance may include one or more of other elements beside at least any one of Fe and Mn, P and O. If the elements are transition metal elements, electron conductivity may be further increased.

It should be noted that the compositional ratio of the above Li ion conductive substance in each example is not limited to the strict compositional ratio represented by the composition formulae and may be at least partially substituted or changed respectively. In addition, particularly when at least a portion of the Li ion conductive substance has an amorphous structure and so on, some of the constituent elements may be stoichiometrically deficient or excessive.

<Conductive carbon C>

Examples of conductive carbon C source material include bitumens such as tar and coal pitch, aromatic compounds and chain hydrocarbons and derivatives thereof, and saccharides such as dextrin and derivatives thereof which undergo pyrolysis from an at least partial molten state and form conductive carbon.

<Surface layer of primary particles of electrode active material >

An electrode material of the present invention has a layer comprising Li ion conductive substance including Li, at least any one of Fe and Mn, P and O, and conductive carbon C on the surface of primary particles of an electrode active material represented by the general formula $LiMPO_4$ (wherein, M=$[Fe_tMn_{1-t}]$, and t is a number between 0 inclusive and 1 inclusive). The layer preferably has a layer thickness of 0.6 nm inclusive to 5 nm inclusive as observed under a high-resolution transmission electron microscope or a structure evaluation means having an equivalent resolution as mentioned above.

The surface layer of the primary particles is preferably an amorphous layer, and accordingly Li ions can move three-dimensionally within the layer, and Li ion conductivity is further increased. It should be noted that this amorphous layer means that a layer has an amorphous structure and may partially have a crystal structure.

Note that observation under a high-resolution transmission electron microscopy or the like can confirm whether or not this surface layer is an amorphous layer.

<Visual appearance of electrode material>

The visual appearance of the electrode material of the present invention is next described based on an outline drawing and a transmission electron micrograph.

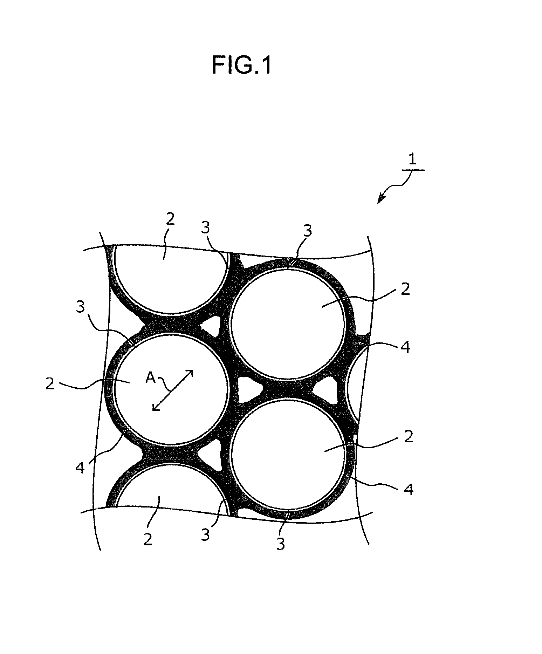

FIG. 1 is an outline drawing of an electrode material according to one example of the present invention.

An electrode material 1 according to one example of the present invention is constituted as secondary particles formed by primary particles 2 of electrode active material $LiMPO_4$ which aggregate and bind to each other via an outer layer 4 which is a composite layer comprising Li ion conductive substance and conductive carbon C. There is an inner layer 3 consisting of Li ion conductive substance between the primary particles 2 and the outer layer 4. It should be noted that the inner layer 3 and the outer layer 4 comprise Li ion conductive substance including Li, at least any one of Fe and Mn, P and O.

In the interior of the primary particles 2 of the electrode active material $LiMPO_4$, Li ions can only move in a one-dimensional direction A. However, in the inner layer 3 and the outer layer 4, Li ions can move two- or three-dimensionally.

In the outline drawing of the electrode material 1 of FIG 1, the layer formed on the surface of the primary particles 2 is clearly divided into the inner layer 3 consisting of Li ion conductive substance and the outer layer 4 as a composite layer comprising Li ion conductive substance and conductive carbon C. However, the case where the inner layer 3 and the outer layer 4 form a united composite layer without having distinct boundaries also falls in the present invention.

An electrode material of the present invention has a composite layer comprising Li ion conductive substance and conductive carbon C on the surface of primary particles of an electrode active material $LiMPO_4$. Such configuration enables Li ions to move from one primary particle to another adjacent primary particle via the layer without an electrolytic solution infiltrating into the interior of electrode material particles (secondary particles). In other words, the inner layer 3 and the outer layer 4, or the united composite layer of these layers bind to a plurality of the primary particles, and due to the presence of these binding sites enclosing the particles, Li ions can move from one primary particle to another adjacent primary particle via the layer even though generated is a lot of closed space among the primary particles within the secondary particles where an electrolytic solution cannot enter. In particular, if the layer has an amorphous structure, this effect is more increased because Li ions can move three-dimensionally via the layer.

Conventionally, in general, in an electrode material having $LiMPO_4$ as an electrode active material, contact area with an electrolytic solution is enlarged to improve the charging and discharging characteristics of the electrode material. Specifically, an electrode active material which has a large specific surface area and allows an electrolytic solution to infiltrate thoroughly into a space among primary particles within secondary particles to easily contact the primary particles is used. However, when using an electrode material having such a large specific surface area for a battery electrode and forming a coating dispersion by mixing and dispersing the electrode material and a conductive auxiliary agent with a commonly-used polar polymer binder such as PVDF, there is a strong interaction between the surface of the electrode material and the polar polymer binder, and the viscosity of the coating dispersion often increases. Thus, increased concentration of solids such as the electrode material in the coating dispersion leads to higher viscosity (gelation) of the coating dispersion, resulting in significant deterioration of coating properties. Furthermore, if a solvent of PVDF such as N-methylpyrrolidone is added to prevent such viscosity increase, it causes not only an increase in solvent cost and the substantial coating incapacity due to the degradation in the fixing property of the coating layer onto the collector foil, but also cracking and peeling of the coating layer after drying and pressing.

Whereas, an electrode material of the present invention can relatively increase an area-equivalent diameter determined by the following equation (1) with a specific surface area, and consequently, relatively decrease a specific surface area without impairing the charging and discharging characteristics of the electrode material. As a result, it resists undesirable effects which appear during the formation of the coating dispersion mentioned above. Furthermore, the concentration of solids such as the electrode material in a coating dispersion can be increased by reducing an adding amount of solvent, and an adding amount of binder can be reduced.

$$\text{Equation (1)}$$
$$(\text{Area-equivalent diameter}) = 6 / \{(\text{true density of electrode active material}) \times (\text{specific surface area})\}$$

In an electrode material of the present invention, an area-equivalent diameter determined by the above equation (1) with a specific surface area obtained from the nitrogen adsorption BET multipoint method is preferably 45 nm or more, more preferably 50 nm or more. Since the primary particles bind via the layer comprising Li ion conductive substance and conductive carbon C to form minute secondary particles, Li ions can move from one primary particle to another two- or three-dimensionally via the layer, resulting in higher Li ion conductivity. Furthermore, electrons can move from one primary particle to another via the layer comprising conductive carbon C, resulting in higher electron conductivity.

This means that it is possible to further improve both electron conductivity and lithium ion conductivity.

A specific surface area that corresponds to the above area-equivalent diameter 45 nm, for example, for M=Fe (where true density of electrode active material is 3.60 g/cm$^3$), is 37.0 m$^2$/g.

Further, that for M=Mn (where true density of electrode active material is 3.43 g/cm$^3$) is 38.9 m$^2$/g. A specific surface area that corresponds to the above area-equivalent diameter 50 nm is 33.3 m$^2$/g for M=Fe, and is 35.0 m$^2$/g for M=Mn.

In these electrode materials, an exposed outer surface of primary particles constituting the electrode material is limited to be equal to the above specific surface area or less. Thus, when using the electrode material for a battery electrode, and foaming a coating dispersion for a current collector metal foil, even if the amount ration of the electrode material is increased, the interaction with polar polymer binder such as PVDF which is added into the coating dispersion can be inhibited. As a result, the viscosity of the coating dispersion can be suppressed. Thus, it is possible to inhibit the deterioration of coating properties and the degradation of the coating layer.

An electrode material of the present invention has both Li ion conductivity and electron conductivity as mentioned above. Therefore, when an electrode material for a main body is used for a battery, due to the presence of a layer comprising Li ion conductive substance and conductive carbon C, and the binding sites among a plurality of primary particles via the layer, Li ion conduction path is maintained, and active material primary particles of the binding sites function well as an electrode material even though an electrolytic solution cannot infiltrate into a space among primary particles.

In an electrode material according to the present invention, in an X-ray photoelectron spectroscopy measurement obtained by irradiating a flat surface of the electrode material after compression molded into a flat pellet with single-crystal spectroscopy Al-K$\alpha$ X-ray at 53$\pm$10 take-off angle when setting vertical and horizontal directions at 0 degrees and 90 degrees with respect to the flat surface, a surface composition determined by the result of narrow scan of electron orbitals of C1s, Lils, Fe2p3/2, Mn2p3/2, P2p and O1s is represented by the general formula $C_c Li_a Fe_x Mn_{1-x} P_y O_z$.

(Wherein, c is a number between 0.5 inclusive and 4 inclusive, a is a number between 2 inclusive and 4 inclusive, x is a number between 0 inclusive and 1 inclusive, and y is a number between 1 inclusive and 3 inclusive. z is a number represented by the following equation (2). $\delta$ is a number which satisfies the following equation (3) assuming that the average valence $N_{Fe}$ of Fe and the average valence $N_{Mn}$ of Mn are both 2.)

$$\text{Equation (2)}$$
$$z = [\{a + x N_{Fe} + (1-x) N_{Mn} + 5y\}/2] - \delta$$

$$\text{Equation (3)}$$
$$0.1 \geq \delta/\{a + x N_{Fe} + (1-x) N_{Mn} + 5y\} \geq 0$$

In the electrode material, the surface layer composition determined by the X-ray photoelectron spectroscopy measurement is an average composition of the surface layer with a depth approximately equal to a mean free path of inner-shell electrons of the constituent elements in the surface layer of the electrode material which can escape from the outer surface of the electrode material after being excited by X-ray radiation. Specifically, it corresponds to an average element composition of the surface layer down to the depth of approximately 6 to 7 nm from the outer most surface in primary particles of electrode active material having the layer comprising Li ion conductive substance and conductive carbon C that constitutes the electrode material. This is considered to be an average composition down to the approximate depth of 6 to 7 nm, combining the layer comprising Li ion conductive substance and conductive carbon C and its underlying layer that is the surface layer of electrode active material.

In an electrode material of the present invention, the Li ion conductive substance comprises effective amounts of Li ions and (poly) phosphate ions to develop high Li ion conductivity, and the Li ion conductive substance comprises an effective amount of at least either of Fe or Mn of transition metal elements to develop electron conductivity. An amount of $\delta$ corresponding to oxygen deficiency of the Li ion conductive substance may be zero. However, when $\delta$ is a positive number within the range of the equation (3), the Li ion conductive substance may have a p-type semi-conductive property, and the electrode material may achieve higher electron conductivity. In the case where $\delta$ is larger than the upper range of the equation (3), structural stability of the material may be impaired.

Furthermore, in an electrode material of the present invention, conductive carbon C is also included in an effective amount ratio to impart electron conductivity. For these reasons, the electrode material having a layer comprising such Li ion conductive substance and conductive carbon C exhibits good charging and discharging characteristics.

According to the electrode material of a preferred aspect, in the general formula $C_c Li_a Fe_x Mn_{1-x} P_y O_z$ of the surface layer composition determined by the X-ray photoelectron spectroscopy measurement, a is 2.0 inclusive to 3.0 inclusive, and y is 1.5 inclusive to 1.6 inclusive. More preferably, a is 2.5 inclusive to 3.0 inclusive, and y is 1.6 exclusive to 2.0 inclusive.

Since in an electrode material having these coefficients a and y, the Li ion conductive substance has particularly excellent Li ion conductivity, and also has effective electron conductivity, the electrode material having the layer comprising Li ion conductive substance and conductive carbon C exhibits particularly good charging and discharging characteristics.

An electrode material of the present invention has an average primary particle diameter of the electrode active material of 20nm or more and less than the area-equivalent diameter. An "average particle diameter" is "a volume-surface mean diameter" calculated by the formula $(\sum nd^3 / \sum nd^2)$ with the particle diameter d (where the average value between major axis length and minor axis length of the primary particles is used) observed under a high-resolution electron microscope (transmission type and scanning type) or the like and the observed number of primary particles, n. Observation view fields are appropriately chosen to secure sufficient n.

In an electrode material of this invention, the average primary particle diameter is smaller than the area-equivalent diameter determined by a specific surface area obtained from the nitrogen adsorption BET multipoint method. This indicates that among the total surface area of all primary particles constituting the electrode material of this aspect, there are sites where nitrogen gas used in the BET specific surface area measurement does not contact or is not adsorbed. In an electrode material of the present invention, a plurality of primary particles aggregate and bind to each other via the layer comprising primarily Li ion conductive substance and conductive carbon C to form minute secondary particles. For this reason, nitrogen gas does not contact and is not adsorbed on the surface of the primary particle at the binding sites, and the specific surface area measured by the BET multipoint method decreases accordingly.

As a result, the area equivalent diameter calculated from the specific surface area is increased, and the average primary particle diameter of electrode active material becomes smaller than the area equivalent diameter. When using the electrode material for a battery electrode, a coating dispersion for coating the electrode cannot infiltrate into or contact the binding sites as with nitrogen used in the BET specific surface area measurement. Therefore, there is hardly interaction at the binding sites with polar polymer binder such as PVDF which is added into the coating dispersion, and the viscosity increase of the coating dispersion is suppressed and it can prevent the degradation of a coating layer.

Further, in an electrode material of this aspect, an average primary particle diameter of electrode active material is 20 nm or more. If an average primary particle diameter is smaller than 20 nm, an electrode active material deteriorates, and the charging and discharging capacity decreases.

An electrode material of the present invention may include sites where primary particles of electrode active material directly join and bind each other, not via the layer comprising Li ion conductive substance and the conductive carbon. Nitrogen gas used in BET specific surface area measurement mentioned above does not contact or is adsorbed on such binding sites, and a specific surface area measured by the BET multipoint method decreases accordingly. As a result, an area equivalent diameter increases, and an average primary particle diameter becomes smaller than the area equivalent diameter. However, since such binding sites do not have Li ion conductivity or electron conductivity, they are not suitable for an electrode material. Therefore, the sites where the primary particles directly join and bind each other may be present in an electrode material of the present invention, but they are preferably less than the binding sites via the layer comprising Li ion conductive substance and conductive carbon. As a specific criterion for above, for example, in the observation images of some binding sites among primary particles in the electrode material under a high-resolution transmission electron microscope, the total sum of projected lengths of the binding sites where the primary particles directly join and bind each other is preferably smaller than the total sum of projected lengths of the binding sites via the layer comprising Li ion conductive substance and conductive carbon.

In an electrode material of the present invention, DC conductivity of the electrode material compressed under a pressure of about 60 MPa at 25 °C after pulverizing until the maximum diameter of secondary particle becomes 20 $\mu$m or less is preferably $10^{-6}$S/cm or more. DC conductivity of the electrode material is more preferably $10^{-4}$S or more. Such electrode material exhibits good charging and discharging characteristics due to the high electron conductivity. In order to obtain such electrode material, it is important to impart sufficient electron conductivity to conductive carbon C formed by pyrolysis, by adding and mixing sufficient amount of conductive carbon precursor to an electrode active material (or precursor thereof), and subsequently, calcinating the mixture in an atmosphere composed of an inert gas at sufficient calcination temperature and for sufficient calcination retention time. It should be noted that a content of conductive carbon C in an electrode material of the present invention is approximately 1% by mass inclusive to 10% mass inclusive, preferably 1.2% by mass inclusive to 6% by mass inclusive. Furthermore, if necessary, after the calcination, the mixture was pulverized to reduce the maximum secondary particle diameter of the electrode material to 20 $\mu$m or less to form a coating layer of electrode material which is smooth, high in packing density and difficult to be peeled.

In an electrode material of the present invention according to a particularly advantageous aspect, the coefficient t in $M=[Fe_tMn_{1-t}]$ is less than 0.2. In such electrode material, 80 percent or more of M is Mn, and therefore, in more than 80 percent cases of using the electrode active material, the electrode material has a high potential such as oxidation-reduction potential against electrode potential reference of metal Li/Li$^+$ being approximately 4.1 V. The electrode material can be used as an electrode material of high energy density which easily substitutes for a conventional electrode material such as $LiCoO_2$ of lamellar crystal structure and $LiMn_2O_4$ of spinel type crystal structure having an equivalent oxidation-reduction potential.

Note that in the case where t is less than 0.2, the area-equivalent diameter needs to be 70 nm or less, more preferably 60 nm or less. In the case where t is less than 0.2, Li ion conductivity becomes extremely low within an electrode active material. If a specific surface area is too small when assembling a battery with the electrode material as a component member, there is lack of contact interface between Li ion conductive medium such as an electrolytic solution and the electrode material sealed in the battery. As a result, even if the electrode material consists of an electrode active material having the layer comprising Li ion conductive substance described above, it tends to fail to provide good battery characteristics. Whereas, in an electrode material where an area-equivalent diameter is equal to or smaller than the value mentioned above, the area-equivalent diameter is sufficiently reduced and consequently, a specific surface area is sufficiently increased. Therefore, the contact interface is sufficient enough to provide good battery characteristics.

When the coefficient t of M described above is 0.2 inclusive to 0.8 inclusive, or 20 percent inclusive to 80 percent inclusive of M is Fe, the area-equivalent diameter is preferably 85 nm or less in order to obtain good battery characteristics. The coefficient t of M described above is more than 0.8, or more than 80 percent of M is Fe, the area-equivalent diameter is preferably 130 nm or less in order to obtain good battery characteristics.

[Example 1]

A production method of Example 1 is described in the following.

It should be noted that M of an electrode active material $LiMPO_4$ is $M=[Fe_tMn_{1-t}]$, wherein the coefficient t is estimated to be approximately 0.03 in Example 1 below, and 0 in Example 2 and Comparative Example 1. In either case, M is Mn alone or close to Mn alone.

First, a $LiMnPO_4$ base material having a minute particle diameter is prepared with reference to Patent Registration No. 4465412 and Japanese Translation of PCT International Application Publication No. JP-T-2010-500113 in the following manner.

First, a nearly saturated aqueous solution of reagent $LiOH \cdot H_2O$ (hereinafter, Li source solution) at room temperature, a nearly saturated aqueous solution of reagent $MnSO_4$ (hereinafter, Mn source solution) at room temperature, and a mixed solution of reagent 85% phosphoric acid, reagent dimethylsulfoxide (DMSO), and water (hereinafter, P source DMSO solution) were each prepared in a prescribed amount such that the overall element molar ratio Li:Mn:P was 3:1:1. The amounts of DMSO and water in the P source DMSO solution were determined such that the ratio of water:DMSO in the solution after mixing all these ingredient solutions was approximately 1:1.

Next, at room temperature, after adding the Li source solution while stirring into the P source DMSO solution until pH reached approximately 7, the Mn source solution and the rest of P source DMSO solution were added in an alternating manner to maintain this pH. After mixing all the amounts, a mixed ingredient solution having a precipitate deposit was obtained. The mixed ingredient solution was heated at 105 °C for 18 hours to cause a reaction. After cooling, the precipitate was recovered by centrifugal separation. By repeating washing with water and centrifugal separation three times followed by vacuum drying at 80 C, a base material of a $LiMnPO_4$ electrode active material was obtained. From an X-ray diffraction result with Cu-K$\alpha$ ray source, broad diffraction peaks of $LiMnPO_4$ crystals and diffraction peaks of a trace of $Li_3PO_4$ crystals were observed.

A specific surface area of the base material of $LiMnPO_4$ electrode active material was 59 m$^2$/g (area-equivalent diameter 30 nm). Observation under a transmission electron microscope revealed elongated primary particle crystals. The major axis length was approximately 50 nm and the minor axis length was approximately 15 nm.

An electrode material was prepared by coating the $LiMnPO_4$ base material with a composite layer comprising Li ion conductive substance and conductive carbon C which has an amorphous structure in the following manner.

First, a 0.1 M solution having 0.23 g of reagent lithium acetate and a 0.1 M solution having 1.51 g of reagent ammonium iron(III) oxalate trihydrate were prepared as an ingredient of Li ion conductive substance. The lithium acetate solution and the ammonium iron(III) oxalate trihydrate solution were added to and mixed with 20 g of the $LiMnPO_4$ base material, and water was distilled away. Then, 1.87 g of reagent tributyl phosphate along with a small amount of ethanol were added into and mixed with the mixture, and ethanol was removed by drying to obtain an ingredient mixture of Li ion conductive substance. 1.08 g of a 250 °C softening point pitch MCP-250D as conductive carbon precursor, manufactured by JFE Chemical Corporation, was added to 23.55 g of the mixture, and then mixed and granulated using a planetary centrifugal mixer ARE-310, manufactured by THINKY CORPORATION to obtain a mixture having a secondary particle diameter in the range of approximately 1 to 30 $\mu$m. The mixture was calcinated in a nitrogen gas stream at approximately 710 °C to obtain an electrode material coated with a composite layer comprising Li ion conductive substance and conductive carbon C.

The electrode material of Example 1 had a carbon content of 4.7% by mass. A specific surface area obtained by the nitrogen adsorption BET multipoint method was 33 m$^2$/g, and an area-equivalent diameter obtained from the following equation (1) mentioned above was 53 nm. Observation under a scanning electron microscope and a transmission electron microscope revealed that the primary particle diameter was approximately 50 nm and less, and a plurality of primary particles in a nearly spherical shape having an average particle diameter of approximately 38 nm determined by the calculation method of volume-surface mean diameter mentioned above aggregated and bound to form secondary particles (a secondary particle diameter was approximately several $\mu$m to 10-odd $\mu$m). Accordingly, the electrode material of Example 1 satisfies the relationship of "20 nm $\leq$ primary particle diameter $\leq$ area-equivalent diameter, and 45 nm $\leq$ area-equivalent diameter $\leq$ 60 nm" that corresponds to the preferred aspect of the present invention which is mentioned above. High-resolution observation under a transmission electron microscope also revealed that a coating layer with a thickness of approximately 2 nm without crystal lattice fringes was present on the surface of the primary particles almost all around the primary particle images.

$$\text{Equation (1)}$$
$$(\text{Area-equivalent diameter}) = 6 \: / \{(\text{true density of electrode active material}) \times (\text{specific surface area})\}$$

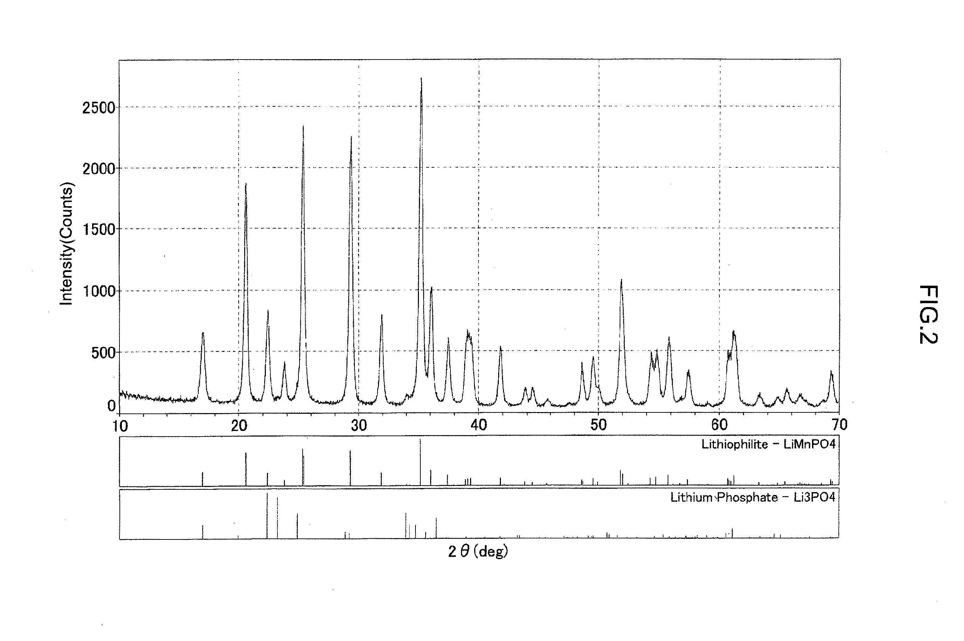

FIG. 2 shows a result of powder X-ray diffraction with Cu-K$\alpha$ ray source performed on the electrode material. In the graph, relatively broad diffraction peaks of LiMnPO$_4$ crystal as a base material of electrode active material were observed, however, recognized diffraction peaks of impurity Li$_3$PO$_4$ crystal in the base material of LiMnPO$_4$ electrode active material before the composite layer coating mentioned above decreased to a trace. Beside these peaks, no more diffraction peaks of crystals were observed. It is believed from the above results that the coating layer of the LiMnPO$_4$ base material is present in an amorphous state.

DC conductivity of the electrode material compressed under a pressure of about 60MPa at 25 °C after pulverizing the electrode material until the maximum secondary particle diameter became 20 $\mu$m or less was 4.8 x 10$^{-4}$S/cm, and the electrode material had electron conductivity.

An X-ray photoelectron spectroscopy (XPS) measurement on the electrode material was conducted in the following manner.

VG Theta-Probe, manufactured by Thermo Fisher Scientific Inc., was used as a measurement apparatus. The electrode material of Example 1 was compression molded into a flat pellet. An X-ray photoelectron spectroscopy measurement was performed by irradiating a flat surface of the flat pellet with single-crystal spectroscopy Al-K$\alpha$ X-ray at a take-off angle of approximately 53 degree (fixed-angle mode) when setting vertical and horizontal directions at 0 degrees and 90 degrees with respect to the flat surface of the flat pellet. The measurement by narrow-scan of each electron orbital of C1s, Lils, Fe2p3/2, Mn2p3/2, P2p and O1s was performed, and the elemental composition of the surface layer of the electrode material was determined from resulting spectrum. The results are shown in Table 1.

It is regarded that the peak of Fe2p3/2 orbital is a trace, and its concentration is approximately 0.1 mol% order of magnitude compared to Mn. It is believed that perhaps during the calcinating step, the majority of Fe migrated into the base material of the electrode active material by diffusion and were replaced with a portion of Mn.

The surface layer composition determined by the X-ray photoelectron spectroscopy measurement is an average composition of the surface layer with a depth approximately equal to a mean free path of inner-shell electrons of the constituent elements in surface layer which can escape from the outer surface of the electrode material after being excited by X-ray radiation. Specifically, it corresponds to an average element composition of the surface layer down to the depth of approximately 6 to 7 nm from the outer most surface in primary particles of electrode active material having the layer comprising Li ion conductive substance and conductive carbon C that constitutes the electrode material.

From Table 1, the surface layer composition (the general formula C$_c$Li$_a$Fe$_x$Mn$_{1-x}$P$_y$O$_z$) of the electrode material of Example 1 was C$_{2.45}$Li$_{2.70}$MnP1$_{.70}$O$_{6.23}$.

Additionally, Table 1 shows a surface layer composition of an electrode material of Example 2 below, and it also shows a surface composition of a LiMnPO$_4$ base material determined by a result of X-ray photoelectron spectroscopy of the LiMnPO$_4$ base material before coating the composite layer as a reference material.

Table 1 Elemental composition of surface layer of Example 1 and Example 2 by X-ray photoelectron Spectroscopy measurement (unit: mol)

| Peak | C (1s) | Li (1s) | Mn (2p3/2) | P (2p) | O (1s) |
|---|---|---|---|---|---|
| Example 1 | 2.45 | 2.70 | 1.00 | 1.70 | 6.23 |
| Example 2 | 1.73 | 2.38 | 1.00 | 1.55 | 5.85 |
| Reference (LiMnPO$_4$ before coating) | 0.23 | 1.89 | 1.00 | 1.44 | 5.65 |

From Table 1, even for LiMnPO$_4$ base material before coating the composite layer, the surface layer composition determined by an X-ray photoelectron spectroscopy measurement is different from a bulk composition of LiMnPO$_4$ crystal (the coefficient a of Li and the coefficient y of P are both 1). The coefficient a of Li is 1.89 and the coefficient y of P is 1.44, and they are present in excess compared to Mn. However, in Example 1, the coefficient a of Li was 2.70 and the coefficient y of P was 1.70. This shows a significant increase in these proportions in the surface layer of the electrode material, compared to the LiMnPO$_4$ base material before coating the composite layer.

Therefore, it is believed that the electrode material of Example 1 comprises effective amounts of Li ions and (poly) phosphate ions to develop high Li ion conductivity, and also comprises an effective amount of the transition metal element Mn to develop electron conductivity. Additionally, the electrode material in this example includes conductive carbon C having high electron conductivity in the surface layer, and this means that the surface of the primary particles has a composite layer comprising Li ion conductive substance and conductive carbon C, which corresponds to the coating layer present in an amorphous state.

The surface layer composition of the electrode material in this example satisfies "the coefficient a of Li is 2.5 inclusive to 3.0 inclusive and the coefficient y of P is 1.6 exclusive to 2.0 inclusive" which corresponds to the preferred aspect of the present invention mentioned above.

From the following equation (2) mentioned above to calculate δ corresponding to O deficiency, assuming that Z=6.23, X is zero, and the average valence $N_{Mn}$ of Mn is 2, δ=0.37.

$$\text{Equation (2)}$$
$$z=[\{a+xN_{Fe}+(1-x)N_{Mn}+5y\}/2]-\delta$$

The value of "δ/{a+xN$_{Fe}$+(14-x)N$_{Mn}$+5y}" in the following equation (3) mentioned above corresponding to oxygen deficiency index was calculated to be 0.056, and this was within a range of the following formula (3).

$$\text{Equation (3)}$$
$$0.1\geq\delta/\{a+xN_{Fe}+(1-x)N_{Mn}+5y\}\geq0$$

A coating liquid was prepared by adding N-methylpyrrolidone (NMP) as a dispersion solvent, acetylene black as a conductive auxiliary agent, and PVDF as a binder (#9130 manufactured by Kureha Corporation) to the above electrode material at an electrode material: conductive auxiliary agent: binder mass ratio of 86.2:6.8:7, and diluting and mixing with the dispersion solvent. The coating liquid was applied to an aluminum foil, and dried and pressed using an automatic coating machine (applicator) manufactured by Hohsen Corp., whereby a positive electrode formulation electrode having an electrode carrying amount of approximately 7.0 mg/cm$^2$ and a coating layer thickness of approximately 40 μm was formed. 2032 type coin batteries were fabricated by incorporating this positive electrode formulation electrode in a face-to-face relationship with a metal Li foil negative electrode with a porous polyolefin separator interposed therebetween and adding an electrolytic solution prepared by dissolving 1M-LiPF$_6$ in ethylene carbonate and ethyl methyl carbonate which have a mass ratio of 3:7.

The electrode material of Example 1 could be used to coat favorably as a coating liquid having a relatively high solid concentration (=(electrode material+conductive auxiliary agent+binder mass)/(coating liquid mass)) with only little increase in viscosity. In this example, the coating liquid could be used to coat with the solid concentration of 48 to 50%. Furthermore, the coating layer of positive electrode formulation electrode formed by coating was also good, and cracking, peeling or the like did not occur at all. The density of coating layer was 1.93 g/cm$^3$ (1.60 g/cm$^3$ for electrode active material reference).

In the case where an area-equivalent diameter was changed by adjusting only the mixing and granulating condition mentioned above, the good coating properties mentioned above were generally maintained for the area-equivalent diameter of 50 nm or less.

[Example 2]

A production method of Example 2 is described in the following.

Using a LiMnPO$_4$ base material prepared in the same manner as the one in Example 1, Li ion conductive substance along with conductive carbon C were self-assembled on the surface of the LiMnPO$_4$ base material to form an electrode material with a layer comprising Li ion conductive substance and conductive carbon C in the following manner.

1.15 g of a 250 °C softening point pitch MCP-250D as conductive carbon precursor, manufactured by JFE Chemical Corporation, was added to the LiMnPO$_4$ base material prepared in the same manner as the one in Example 1. The materials were then mixed and granulated using a planetary centrifugal mixer ARE-310, manufactured by THINKY CORPORATION, to obtain a mixture having a secondary particle diameter in the range of approximately 1 to 30 μm. The mixture was calcinated in a nitrogen gas stream at approximately 710 °C to obtain an electrode material coated with a layer comprising conductive carbon C.

The electrode material of Example 2 had a carbon content of 4.0% by mass. A specific surface area obtained by the nitrogen adsorption BET multipoint method was 32 m²/g, and an area-equivalent diameter obtained from the following formula (1) mentioned above was 55 nm.

Observation under a scanning electron microscope and a transmission electron microscope revealed that as in the case of Example 1, the primary particle diameter was approximately 50 nm and less, and a plurality of primary particles in a nearly spherical shape having an average particle diameter of approximately 39 nm determined by the calculation method of volume-surface mean diameter mentioned above aggregated and bound to form secondary particles (secondary particle diameter was approximately several μm to 10-odd μm). Consequently, in terms of the primary particle diameter and the area-equivalent diameter, the electrode material of Example 2 also satisfies the relationship of "20 nm ≤ primary particle diameter ≤ area-equivalent diameter, and 45 nm ≤ area-equivalent diameter ≤ 60 nm" that corresponds to the particularly preferred aspect of the present invention which is mentioned above.

High-resolution observation under a transmission electron microscope also revealed that a coating layer with a thickness of approximately 2 nm without crystal lattice fringes on the surface of the primary particles was present almost all around the primary particle images as in the case of Example 1.

## Equation (1)

$$(\text{Area-equivalent diameter}) = 6 / \{(\text{true density of electrode active material}) \times (\text{specific surface area})\}$$

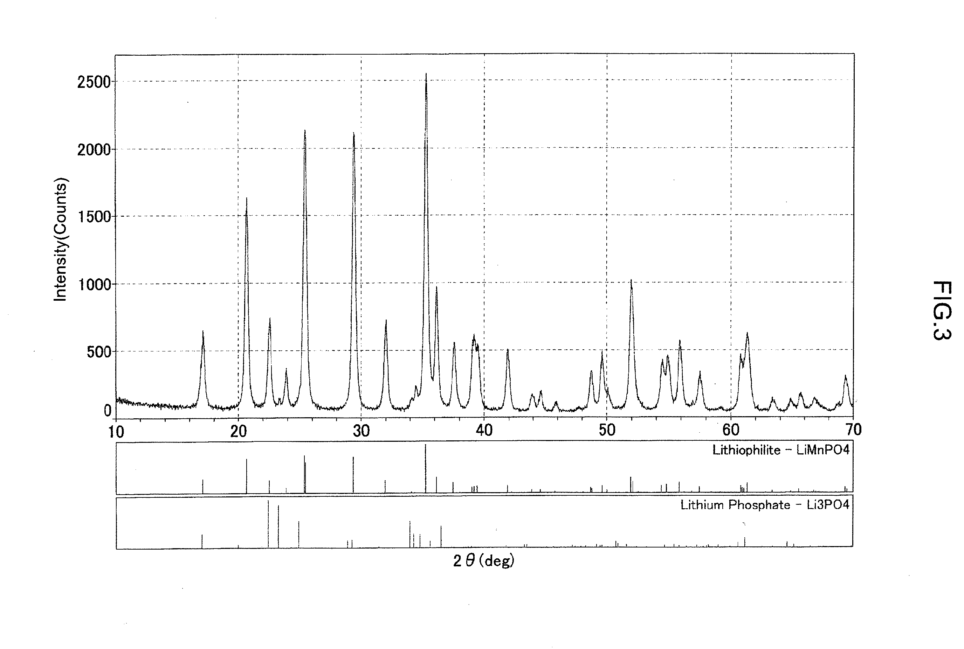

FIG. 3 shows a result of powder X-ray diffraction with Cu-Kα ray source performed on the electrode material. In the graph, relatively broad diffraction peaks of $LiMnPO_4$ crystal as a base material of electrode active material were observed, however, recognized diffraction peaks of impurity $Li_3PO_4$ crystal in the base material of $LiMnPO_4$ electrode active material before the composite layer coating mentioned above decreased to a trace. Beside these peaks, no more diffraction peaks of crystals were observed as in the case of Example 1. Based on above, it is believed that the coating layer of the $LiMnPO_4$ base material is also present in an amorphous state in this example.

DC conductivity of the electrode material at 25 °C measureed in the same manner as in Example 1 was 5.7 x $10^{-6}$ S/cm.

An X-ray photoelectron spectroscopy (XPS) measurement on the electrode material excluding narrow scan of Fe2p3 was conducted as in the case of Example 1. The results are shown in the Table 1 mentioned above.

From Table 1, the surface layer composition (the general formula $C_cLi_aFe_xMn_{1-x}P_yO_z$) of the electrode material of Example 2 was $C_{1.73}Li_{2.38}MnP_{1.55}O_{5.85}$, and the coefficient a of Li was 2.38 and the coefficient y of P was 1.55. Accordingly, the surface layer of the electrode material of Example 2 has markedly higher proportions of Li and P than the surface layer of $LiMnPO_4$ base material before coating the composite layer, though not to the extent of Example 1.

Therefore, it is believed that the surface layer of the electrode material comprises effective amounts of Li ions and (poly) phosphate ions to develop high Li ion conductivity, and also comprises an effective amount of the transition metal element Mn to develop electron conductivity. Additionally, since the electrode material in this example includes conductive carbon C having high electron conductivity in the surface layer, the surface of the primary particles has not only conductive carbon C but also a composite layer comprising Li ion conductive substance and conductive carbon C, which corresponds to the coating layer present in an amorphous state.

However, formation factor of Li ion conductive substance was unknown. It is estimated that as a result of some kind of heat-induced reaction between the $LiMnPO_4$ base material and the layer of conductive carbon C formed on the surface thereof during calcination for the production of the electrode active material in Example 2, Li ion conductive substance was formed by self-assembly at the interface.

The surface layer composition of the electrode material in this example satisfies "the coefficient a of Li is 2.0 inclusive to 3.0 inclusive and the coefficient y of P is 1.5 inclusive to 1.6 inclusive" which corresponds to the preferred aspect of the present invention which is mentioned above.

From the following equation (2) mentioned above to calculate δ corresponding to O deficiency, assuming that Z=5.85, X is zero, and the average valence $N_{Mn}$ of Mn is 2, δ=0.215.

## Equation (2)

$$z = [\{a + xN_{Fe} + (1-x)N_{Mn} + 5y\}/2] - \delta$$

The value of "δ/{a+xN_{Fe}+(1-x)N_{Mn}+5y}" in the following equation (3) mentioned above corresponding to oxygen deficiency index was calculated to be 0.018, and this was within a range of the following equation (3).

$$\text{Equation (3)}$$
$$0.1 \geq \delta/\{a+xN_{Fe}+(1-x)N_{Mn}+5y\} \geq 0$$

A coating liquid was prepared by adding N-methylpyrrolidone (NMP) as a dispersion solvent, acetylene black as a conductive auxiliary agent, and PVDF as a binder (#9130 manufactured by Kureha Corporation) to the above electrode material at an electrode material: conductive auxiliary agent: binder mass ratio of 86.2:6.8:7, and diluting and mixing with the dispersion solvent. The coating liquid was applied to an aluminum foil, and dried and pressed using an automatic coating machine (applicator) manufactured by Hohsen Corp., whereby a positive electrode formulation electrode having an electrode carrying amount of approximately 7.0 mg/cm$^2$ and a coating layer thickness of approximately 40 μm was formed. 2032 type coin batteries were fabricated by incorporating this positive electrode formulation electrode in a face-to-face relationship with a metal Li foil negative electrode with a porous polyolefin separator interposed therebetween and adding an electrolytic solution prepared by dissolving 1M-LiPF$_6$ in ethylene carbonate and ethyl methyl carbonate which have a mass ratio of 3:7.

The electrode material of Example 2 also could be used to coat favorably as a coating liquid having a relatively high solid concentration (=(electrode material+conductive auxiliary agent+binder mass)/(coating liquid mass)) with only little increase in viscosity. In this example, the coating liquid also could be used to coat with the solid concentration of 48 to 50%. Furthermore, the coating layer of positive electrode formulation electrode formed by coating was also good, and cracking, peeling or the like did not occur at all. The density of coating layer was 2.00 g/cm$^3$ (1.66 g/cm$^3$ for electrode active material reference).

[Comparative Example 1]

A production method of Comparative Example 1 is described in the following.

An electrode material having a layer comprising Li ion conductive substance and conductive carbon C same as that of Example 1, except that the electrode material has a longer area-equivalent diameter than that of the aspects of the invention and secondary particles are amorphous, was prepared in the following manner.

1.15 g of a 250 °C softening point pitch MCP-250D as conductive carbon precursor, manufactured by JFE Chemical Corporation, was added to the LiMnPO$_4$ base material prepared in the same manner as that of Example 1. Subsequently, the above materials were well dispersed and mixed using an automatic agate mortar AGB, manufactured by Ishikawa Kojo to obtain the mixture. However, granulation by a planetary centrifugal mixer used in Example 1 and Example 2 was not performed. The mixture was calcinated in a nitrogen gas stream at approximately 710 °C to obtain an electrode material coated with a layer comprising conductive carbon C.

The electrode material of Comparative Example 1 had a carbon content of 4.4% by mass. A specific surface area obtained by the nitrogen adsorption BET multipoint method was 41 m$^2$/g, and an area-equivalent diameter obtained from the following equation (1) mentioned above was 43 nm. Comparative Example 1 has bigger specific surface area, thus, smaller area-equivalent diameter than the ones in Example 1 and Example 2. Observation under a scanning electron microscope revealed that the electrode material in Comparative Example 1 formed secondary particles which were bulky amorphous and did not have clear contours. Therefore, the electrode material in Comparative Example 1 does not fall in the aspects of the present invention.

$$\text{Equation (1)}$$
$$(\text{Area-equivalent diameter}) = 6 / \{(\text{true density of electrode active material}) \times (\text{specific surface area})\}$$

The result of X-ray diffraction of the electrode material was almost the same as that of Example 2, and there was no significant difference in the position, intensity, relative intensity ratio and half width of the crystal peaks corresponding to LiMnPO$_4$.

Because the results of X-ray diffraction and the specific surface area values of Example 2 and Comparative Example 1 were almost the same, it is determined that Example 2 and Comparative Example 1 have almost the same primary particle diameter.

The electrode material in Comparative Example 1 shows a significant increase in the viscosity of a coating liquid compared to the ones in Example 1 and Example 2. Therefore, it was difficult to be used to coat without lowering the solid concentration (=(electrode material+conductive auxiliary agent+binder mass)/(coating liquid mass)) of the coating liquid. It was required to lower the solid concentration to 40% or less to facilitate coating as in Example 1 and Example 2, however, cracking and peeling occurred after drying and pressing. As a result, coating with solid concentration of 46% was performed, however, it was almost a limit of coating performance due to its extremely high viscosity. The density of coating layer was 1.82 g/cm$^3$ (1.51 g/cm$^3$ for electrode active material reference).

<Rate characteristic evaluation on the coin batteries of Example 1, Example 2 and Comparative Example 1>

At 25 C, a coin battery of Example 1 described above was subjected to constant current charging to 4.5 V at 0.1C and then constant voltage charging at 4.5 V (final current 0.01C). Then, the coin battery was subjected to discharging to 2.5 V at 0.1C. Subsequently, under the same condition above, constant current charging and constant voltage charging were conducted, and the coin battery was subjected to constant current discharging at 1C, 5C and 10C successively to measure the rate characteristics

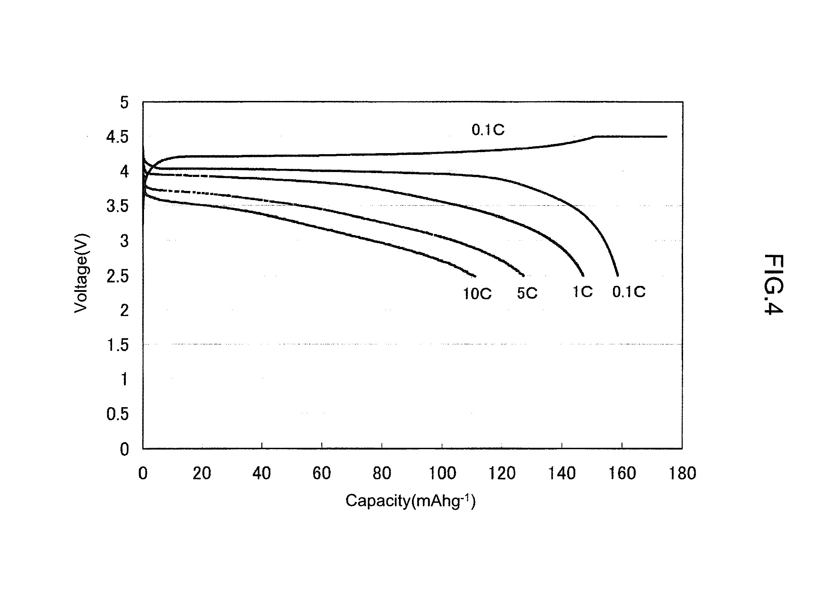

The results are shown in FIG. 4.

Rate characteristics of coin battery of Example 2 described above were measured under the same condition as the one of coin battery in Example 1.

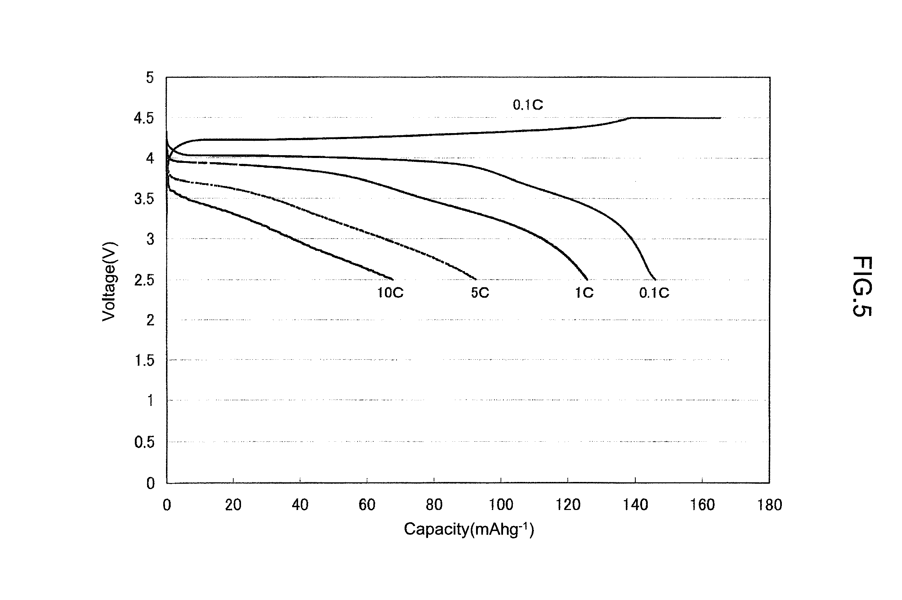

The results are shown in FIG. 5.

Since a coin battery of Comparative Example 1 described above has worse polarization characteristics due to charging and discharging than the ones in Example 1 and Example 2, the coin battery was subjected to constant current charging to 4.5 V at 0.01C and then constant voltage charging at 4.5 V (final current 0.001C). Then, the coin battery was subjected to discharging to 2.5 V at 0.01C. Subsequently, under the same condition above, constant current charging and constant voltage charging were conducted, and the coin battery was subjected to constant current discharging at 0.1C to measure the rate characteristics.

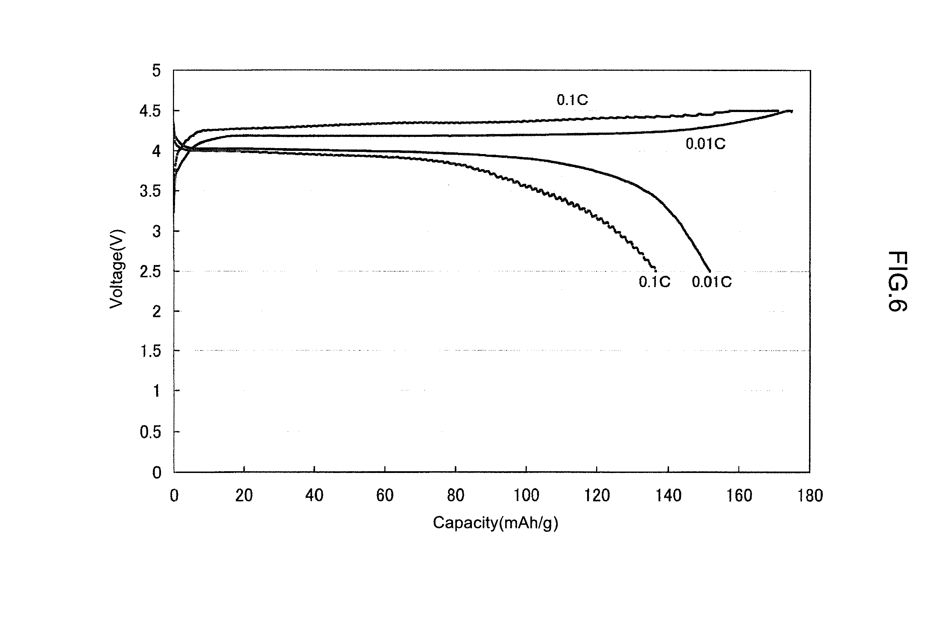

The results are shown in FIG. 6.

From FIG 4, the coin battery of Example 1 showed a discharge capacity of 158 mAh/g when discharged at 0.1C. It also showed extremely high discharge capacity values, such as 147 mAh/g when discharged at 1C, 127 mAh/g when discharged at 5C, and 111 mAh/g when discharged at 10C.

From FIG 5, the coin battery of Example 2 showed a discharge capacity of 146 mAh/g when discharged at 0.1C. It also showed high discharge capacity values, such as 126 mAh/g when discharged at 1C, 93 mAh/g when discharged at 5C, and 67 mAh/g when discharged at 10C although they were lower than the ones in Example 1.

In the meantime, from FIG. 6, a discharge capacity of the coin battery of Comparative Example 1 remained 136 mAh when discharged at 0.1C. It showed 152 mAh/g when discharged at 0.01C.

When comparing among FIG. 4, FIG. 5 and FIG. 6, the coin battery of Example 1 has an improved symmetry of discharge curves of charging side and discharging side at 0.1C compared to Example 2 and Comparative Example 1, and particularly the discharge curve of discharging side is improved.

From these results, the coin battery of Example 1 and the coin battery of Example 2 have better rate characteristics than the coin battery of Comparative Example 1, and especially Example 1 achieved excellent result.

**Claims**

1. An electrode material comprising:

   a layer having Li ion conductive substance including Li, at least any one of Fe and Mn, P and O, and conductive carbon C on a surface of primary particles of an electrode active material represented by general formula LiMPO$_4$ (wherein, M=[Fe$_t$Mn$_{1-t}$], and t is a number between 0 inclusive and 1 inclusive);
   minute secondary particles formed from a plurality of the primary particles that aggregate, and bind to each other via the layer having Li ion conductive substance and conductive carbon C;
   wherein an area-equivalent diameter determined by the following equation (1) with a specific surface area obtained from the nitrogen adsorption Brunauer, Emmett, Teller (BET) multipoint method is 45 nm or more.

Equation (1)

$$\text{(Area-equivalent diameter)} = 6 / \{(\text{true density of electrode active material}) \times (\text{specific surface area})\}$$

2. The electrode material according to Claim 1, wherein in an X-ray photoelectron spectroscopy measurement obtained by irradiating a flat surface of the electrode material after compression molded into a flat pellet with single-crystal spectroscopy Al-K$\alpha$ X-ray at 53±10 take-off angle when setting vertical and horizontal directions at 0 degrees and 90 degrees with respect to the flat surface, a surface layer composition determined by the result of narrow-scan of each electron orbital of C1s, Li1s, Fe2p3/2, Mn2p3/2, P2p and O1s is represented by general formula $C_cLi_aFe_xMn_{1-x}P_yO_z$.

(Wherein, c is a number between 0.5 inclusive and 4 inclusive, a is a number between 2 inclusive and 4 inclusive, x is a number between 0 inclusive and 1 inclusive, and y is a number between 1 inclusive and 3 inclusive. z is a number represented by a following equation (2). $\delta$ is a number which satisfies a following equation (3) assuming that the average valence $N_{Fe}$ of Fe and the average valence $N_{Mn}$ of Mn are both 2.)

$$\text{Equation (2)}$$
$$z=[\{a+xN_{Fe}+(1-x)N_{Mn}+5y\}/2]-\delta$$

$$\text{Equation (3)}$$
$$0.1 \geq \delta/\{a+xN_{Fe+}(1-x)N_{Mn}+5y\} \geq 0$$

3.  The electrode material according to Claim 2, wherein a is 2.0 inclusive to 3.0 inclusive, and y is 1.5 inclusive to 1.6 inclusive in the general formula $C_cLi_aFe_xMn_{1-x}P_yO_z$.

4.  The electrode material according to Claim 2, wherein a is 2.5 inclusive to 3.0 inclusive, and y is 1.6 exclusive to 2.0 inclusive in the general formula $C_cLi_aFe_xMn_{1-x}P_yO_z$.

5.  The electrode material according to any one of Claims 1 to 4, wherein the average primary particle diameter is 20 nm or more and less than the area-equivalent diameter.

6.  The electrode material according to any one of Claims 1 to 5, wherein DC conductivity of the electrode material compressed under a pressure of 60 MPa at 25 °C after pulverizing until the maximum secondary particle diameter becomes 20 $\mu$m or less is $10^{-6}$S/cm or more.

7.  The electrode material according to any one of Claims 1 to 6, wherein t is less than 0.2 in said M=$[Fe_tMn_{1-t}]$.

8.  The electrode material according to Claim 7, wherein the area-equivalent diameter is 70 nm or less.

9.  The electrode material according to Claim 8, wherein the area-equivalent diameter is 60 nm or less.

10. The electrode material according to any one of Claims 1 to 9, wherein the layer comprising Li ion conductive substance and conductive carbon C is an amorphous layer.

11. The electrode material according to any one of Claims 1 to 10, wherein the area-equivalent diameter is 50nm or more.

12. A method for producing an electrode material comprising:

a mixing step 1 of dispersing and mixing, a base material of an electrode active material in fine powder form, represented by general formula $LiMPO_4$ (wherein, M=$[Fe_tMn_{1-t}]$, and t is a number between 0 inclusive and 1 inclusive), Li ion source material, and ion source material of at least any one of Fe ion and Mn ion;
a mixing step 2 of dispersing and mixing, the mixture obtained from the mixing step 1, and phosphate ion source material or multivalent phosphate ion source material;
a mixing and granulating step of dispersing and mixing the mixture obtained from the mixing step 2 and conductive carbon C source material and minutely granulating the mixture until the aggregate particle diameter becomes 1 $\mu$m inclusive to 50 $\mu$m inclusive; and
a calcinating step of calcinating the mixture obtained from the mixing and granulating step to form a layer having Li ion conductive substance including Li, at least any one of Fe and Mn, P and O, and conductive carbon C on the surface of primary particles of the base material of electrode active material in fine powder form represented by the general formula $LiMPO_4$.

# FIG.1

## FIG.2

# FIG.3

# FIG.4

## FIG.5

# FIG.6

<div align="center">**INTERNATIONAL SEARCH REPORT**</div>

| International application No. |
|---|
| PCT/JP2013/080293 |

**A. CLASSIFICATION OF SUBJECT MATTER**
*H01M4/58*(2010.01)i, *H01M4/36*(2006.01)i

According to International Patent Classification (IPC) or to both national classification and IPC

**B. FIELDS SEARCHED**

Minimum documentation searched (classification system followed by classification symbols)
H01M4/58, H01M4/36

Documentation searched other than minimum documentation to the extent that such documents are included in the fields searched

| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-76820 A (Hitachi Vehicle Energy, Ltd.), 14 April 2011 (14.04.2011), entire text; all drawings & US 2012/0183839 A1 & WO 2011/039921 A1 | 1-12 |
| A | JP 2007-213961 A (Sanyo Electric Co., Ltd.), 23 August 2007 (23.08.2007), entire text; all drawings & US 2007/0184352 A1 & EP 1826862 A2 & DE 602007010851 D & KR 10-2007-0081080 A & CN 101017915 A & TW 200810182 A | 1-12 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 January, 2014 (15.01.14) | 28 January, 2014 (28.01.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/080293

C (Continuation). DOCUMENTS CONSIDERED TO BE RELEVANT

| Category* | Citation of document, with indication, where appropriate, of the relevant passages | Relevant to claim No. |
|---|---|---|
| A | WO 2011/131553 A2 (SUD-CHEMIE AG),<br>27 October 2011 (27.10.2011),<br>entire text; all drawings<br>& JP 2013-525964 A   & US 2013/0095385 A1<br>& EP 2561567 A    & DE 102010018041 A<br>& CA 2797030 A    & CN 102918685 A<br>& KR 10-2013-0045268 A  & TW 201205945 A | 1-12 |
| A | WO 2011/091525 A1 (PHOSTECH LITHIUM INC.),<br>04 August 2011 (04.08.2011),<br>entire text; all drawings<br>& JP 2013-518372 A   & US 2013/0095390 A1<br>& EP 2529431 A    & CA 2691265 A<br>& TW 201232899 A   & CN 102947978 A<br>& KR 10-2013-0002319 A  & CA 2817058 A<br>& CA 2691265 A1 | 1-12 |
| A | WO 2012/052811 A1 (COUNCIL OF SCIENTIFIC &<br>INDUSTRIAL RESEARCH),<br>26 April 2012 (26.04.2012),<br>entire text; all drawings<br>& JP 2013-546126 A   & EP 2630685 A | 1-12 |
| P,A | JP 2013-152932 A (Hutchinson),<br>08 August 2013 (08.08.2013),<br>entire text; all drawings<br>& US 2013/0183577 A1   & EP 2618409 A1<br>& FR 2985857 A    & CN 103208610 A<br>& CA 2802199 A    & KR 10-2013-0084638 A<br>& CA 2802199 A1 | 1-12 |
| P,A | JP 2013-77392 A (Panasonic Corp.),<br>25 April 2013 (25.04.2013),<br>entire text; all drawings<br>(Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011181375 A
- JP T2010517240 W
- WO 2012133566 A
- JP 2002151082 A
- JP 2004095385 A
- JP 2007119304 A
- JP HEI9134724 A
- JP 2004 A
- JP 63386 A
- JP 2003157845 A
- JP 2010500113 W